# EUROPEAN PATENT APPLICATION

(11) **EP 1 018 851 A2**
(43) Date of publication of application: **12.07.2000**
(21) Application number: 00300110.4
(22) Date of filing: 10.01.2000
(51) Int. Cl.: H04Q 11/04

(54) **A network pedestal unit in a telecommunications network**

(30) Priority: 08.01.1999 US 227457
(71) Applicant: Alcatel USA Sourcing, L.P., Plano, TX 75075 (US)
(72) Inventor: Pisterzi, Michael J., Plano, Texas 75093 (US); Dobbs, Michael A., Naperville, Illinois 60563 (US)
(74) Representative: Horner, David Richard

(57) **Abstract**

A telecommunications network (10) includes a network pedestal unit (20) that receives and sends telephony information from and to a digital loop carrier (16). The digital loop carrier (16) provides and receives telephony information to and from a switching element (12). The network pedestal unit (20) includes a high speed digital subscriber line interface (30), a processing unit (32), and a subscriber interface (34). In the downstream direction, the high speed digital subscriber line interface (30) receives telephony information over a twisted pair link (22) operable to carry the telephony information at an increased bandwidth rate. The high speed digital subscriber line interface (30) decodes the telephony information from the twisted pair link (22) for transfer to the processing unit (32). The multiplexing unit (32) extracts particular telephony information according to its intended destination. The subscriber interface (34) receives extracted telephony information from the processing unit (32) for transfer to a particular subscriber coupled thereto.

## Description

### TECHNICAL FIELD OF THE INVENTION

The present invention relates in general to telecommunications signal processing and more particularly to a network pedestal unit in a telecommunications network.

### BACKGROUND OF THE INVENTION

Telephone companies are finding the need to provide increasingly more information over existing telephone lines as the demand by subscribers for more information grows at a rapid pace. However, existing telephone lines are limited in the amount of information which they can carry. To provide a capability to increase information rates, telephone companies have been forced to provide additional line connections, re-enforce existing lines, and rehabilitate telephone lines already in place. Such measures are extremely costly and time consuming. Therefore, it is desirable to provide a network device which can use existing telephone line connections while providing higher information content on the line.

### SUMMARY OF THE INVENTION

From the foregoing, it may be appreciated that a need has arisen for a network unit that can provide a temporary solution to the demand for increased information while still using existing telephone line plant. In accordance with the present invention, a network pedestal unit in a telecommunications network is provided that substantially eliminates or reduces disadvantages and problems associated with conventional network devices.

According to an embodiment of the present invention, there is provided a network pedestal unit in a telecommunications network that includes a high speed digital subscriber line interface operable to receive in a downstream direction telephony information on a twisted pair link. A processing unit extracts particular telephony information provided by the high speed digital subscriber line interface according to an intended destination. A subscriber interface receives the particular telephony information having the subscriber interface as the intended destination and provides the particular telephony information to one of a plurality of subscribers as determined by the intended destination.

The present invention provides various technical advantages over conventional network devices. For example, one technical advantage is to provide a network unit that can handle increased information carried on existing telephone lines. Another technical advantage is to provide a solution to the demand for increased information capability while still using existing telephone line plant. Other examples may be readily ascertainable by those skilled in the art from the following figures, description, and claims.

### BRIEF DESCRIPTION OF THE DRAWINGS

For a more complete understanding of the present invention and the advantages thereof, reference is now made to the following description taken in conjunction with the accompanying drawings, wherein like reference numerals represent like parts, in which:
FIGURE 1 illustrates a simplified block diagram of a telecommunications network;
FIGURE 2 illustrates a simplified block diagram of a network pedestal unit in the telecommunications network; and
FIGURE 3 illustrates a block diagram of a processing unit in the network pedestal unit.

### DETAILED DESCRIPTION OF THE INVENTION

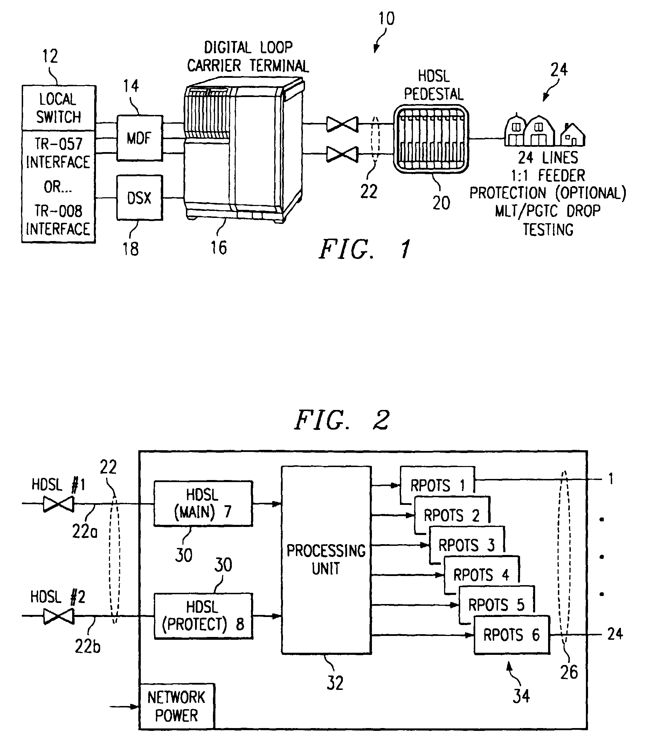

FIGURE 1 is a block diagram of a telecommunications network 10. Telecommunications network 10 includes a network switching element 12 that receives and sends telephony information, including voice, data, and video signals, from and to subscribers or other network elements within telecommunications network 10. Telephony information for local access in a downstream direction is provided by network switching element 12 to a digital loop carrier 16 through either a main distribution frame 14 or an intermediate switching element 18 depending upon the routing and industry standard of the telephony information. Digital loop carrier 16 provides selected telephony signals received from digital loop carrier 16 to appropriate subscribers 24 over subscriber drops 26.

In the upstream direction, subscribers 24 send telephony information to network pedestal unit 20 over telephony information for transport to digital loop carrier 16 over trusted pair link 22 or for local routing to a local destination subscriber over subscriber drop 26. Digital loop carrier 16 provides telephony information to network switching element 12 through either main distribution frame 14 or intermediate switching element 18 or to local subscribers coupled to digital loop carrier 16. Network switching element 12 passes telephony information to subscribers coupled thereto or other network elements within telecommunications network 10.

FIGURE 2 is a simplified block diagram of network pedestal unit 20. Network pedestal unit 20 receives telephony information in the downstream direction from digital loop carrier 16 over twisted pair link 22 at a high speed digital subscriber line interface 30. Twisted pair link 22 may include a primary link 22a and a protection link 22b in order to provide network redundancy capabilities. Similarly, high speed digital subscriber line interface unit 30 may have a main element 30a coupled to primary link 22a and a protection element 30b coupled to protection link 22b to facilitate the redundant capability. High speed digital subscriber line interface 30 decodes telephony information from twisted pair link 22 for transfer to a processing unit 32. Processing unit 32 determines the appropriate destination for the telephony information and accordingly passes it to an appropriate subscriber interface 34. Subscriber interface 34 then passes the telephony information to the appropriate subscriber 24 over the appropriate subscriber drop 26.

For upstream transfer, subscribers 24 provide telephony information to corresponding subscriber interfaces 34. Subscriber interfaces 34 process the telephony information received from subscribers 24 for transfer to processing unit 32. A particular subscriber interface 34 may also have the capability to locally route telephony information originating at a subscriber coupled thereto and destined for another subscriber coupled thereto. Processing unit 32 may also provide local routing of information between subscribers coupled to different subscriber interfaces 34 of network pedestal unit 20. High speed digital subscriber line interface 30 prepares the telephony information for sending to digital loop carrier 16 according to the protocol and bandwidth requirements for transfer over twisted pair link 22.

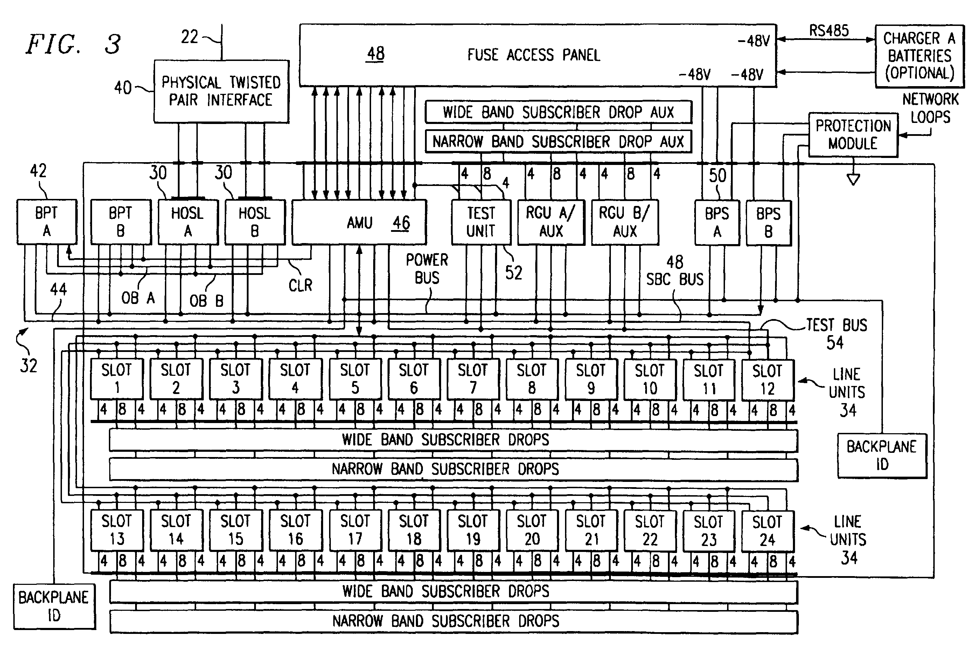

FIGURE 3 is a block diagram of processing unit 32 including high speed digital subscriber line interface 30 and subscriber interfaces 34. Telephony information received at and transmitted by high speed digital subscriber line interface 30 through a twisted pair physical interface 40 coupled to twisted pair link 22. High speed digital subscriber line interface 30 provides the transmit, receive, and multiplexing functions between network pedestal unit 20 and digital loop carrier 16. A bandwidth allocator/processor/timing unit (BPT) 42 interfaces signals of high speed digital subscriber line interface 30 with subscriber busses 44 connected to subscriber interfaces 34. BPT 42 preferably performs DS0 signal level switching of time slots between twisted pair link 22 and subscriber busses 44. BPT 42 includes a control processor with bandwidth allocation capability to direct bandwidth to the appropriate line unit slots of subscriber interfaces 34. BPT 42 is also responsible for diagnostics, timing and synchronization, alarm reporting, maintenance interfacing, and initialization coordination.

Network pedestal unit 20 also includes an alarm maintenance unit 46 that provides a primary interface to BPT 42, a fuse access panel 48, and a bank power supply 50. Alarm maintenance unit 46 coordinates alarm, input and output signals, and maintenance functions. Bank power supply 50 provides all necessary operating voltages for network pedestal unit 20. Bank power supply 50 receives battery inputs and provides desired voltage outputs therefrom. Fuse access panel provides a single front access location for cell connections within network pedestal unit 20.

Other units within network pedestal unit 20 may include a test unit 52 that serves as an input/output device for testing and verification of metallic interfaces therein. Test unit 52 provides access to an internal test bus 54 from jacks on fuse access panel 48 or test head pairs available at the backplane cabling of subscriber interfaces 34. A ring generator unit 56 may be included to provide a ringing voltage source for subscriber interfaces 34.

Network pedestal unit 20 provides the capability to handle telecommunications transfer at an increased bandwidth over conventional twisted pair wire. Network pedestal unit 20 uses the existing twisted pair wire link from a network element such as a digital loop carrier 16. If a later installation of an optical fiber link is performed, network pedestal unit 20 can be adapted to support communications over the optical fiber link. To support the optical fiber Link, high speed digital subscriber line interface 30 is replaced by an optical fiber link interface. For an optical fiber link configuration, processing unit 32 and subscriber interfaces 34 may remain the same. The types of subscriber interfaces 34 may vary depending upon the desired service, type of subscriber, and desired communication link being implemented.

## Claims

1. A network pedestal unit in a telecommunications network, comprising:
a high speed digital subscriber line interface operable to receive in a downstream direction telephony information on a twisted pair link;
a processing unit operable to extract particular telephony information provided by the high digital subscriber link according to an intended destination;
a subscriber interface operable to receive the particular telephony information having the subscriber interface as the intended destination, the subscriber interface operable to provide the particular telephony information to one of a plurality of subscribers as determined by the intended destination.

2. A telecommunications network, comprising:
a digital loop carrier terminal operable to process telephony information to and from a local switch on a network side, the digital loop carrier operable to receive and provide telephony information on a subscriber side over a high speed digital subscriber line twisted pair link;
a network pedestal unit operable to receive telephony information from and provide telephony information to the digital loop carrier terminal over the high speed digital subscriber line twisted pair link, the network pedestal unit operable to receive telephony information from and provide telephony information to subscribers over subscriber drops.
